# EUROPEAN PATENT APPLICATION

(11) **EP 4 060 685 A1**
(43) Date of publication of application: **21.09.2022**
(21) Application number: 19952337.4
(22) Date of filing: 18.12.2019
(51) Int. Cl.: H01B 9/00, H01B 9/02, H01B 7/00, H01B 7/02, H01B 7/14, H01B 7/17, H01B 7/282

(54) **DC SUBMARINE CABLE**

(30) Priority: 15.11.2019 CN 201911122420
(71) Applicant: Zhongtian Technology Submarine Cable Co., Ltd., Nantong, Jiangsu 226010 (CN)
(72) Inventor: ZHANG, Hongliang, Nantong, Jiangsu 226009 (CN); HU, Ming, Nantong, Jiangsu 226009 (CN); YU, Hongmiao, Nantong, Jiangsu 226000 (CN); YAN, Yan, Nantong, Jiangsu 226000 (CN); YAN, Zhiyu, Nantong, Jiangsu 226000 (CN); XIE, Shuhong, Nantong, Jiangsu 226010 (CN); XUE, Jianlin, Nantong, Jiangsu 226010 (CN)
(74) Representative: Zaboliene, Reda
(86) International application number: PCT/CN2019/126418
(87) International publication number: WO 2021/093085

(57) **Abstract**

A robust and adaptable direct current submarine cable includes, from inside to outside, a conductor unit, an insulation unit, and a protection unit. The protection unit includes a water blocking tape, a metal sheath, and an outer sheath from inside to outside. A return unit is also installed, the return unit having the same current carrying capacity as the conductor unit. When a direct current submarine cable in one circuit fails, the return conductor layer in another intact direct current submarine cable can be used as a return path to form a loop to continue working, ensuring a power transmission capacity of 50% of that of the original cable.

## Description

### FIELD

The subject matter herein generally relates to undersea power and signal cables, especially to a direct current submarine cable.

### BACKGROUND

Direct current (DC) submarine cables can connect to converter equipment at two ends of a DC transmission system, and support submarine cable accessories to build a complete underwater or land transmission line system. The DC submarine cable power transmission system consists of two polar DC submarine cables to form a loop. An AC submarine cable system consists of three submarine cables to form the loop, and in comparison, the DC submarine cable power transmission system has the cost advantage. In the true bipolar DC transmission system, in the event of a single-polarity submarine cable failure, the system has the ability to continue working at a level that retains 50% of the original transmission capacity.

In view of the current scheme of building additional return submarine cables in the true bipolar DC transmission system, the role of the polar submarine cable in the case of non-fault is only to balance the differential current between the two polar submarine cables. The insulation level requirement of the system is lower than that of the polar submarine cable, but the current-carrying capacity requirement of the system is the same as that of the polar submarine cable. There is a more obvious waste in the manufacturing cost and laying cost of the submarine cable. If the body of seawater is used as the return solution, in the process of long-distance current transmission, electrical corrosion of underwater pipelines and facilities will occur, and there will be an impact on the marine ecological environment. Therefore, it is very important to find a more economical and safe return method for the DC transmission system. In addition, the conventional DC submarine cable will have mechanical and fatigue effects on the internal electrical insulation components and optical communication components of the submarine cable under the condition of frequent movement by external forces. These effects have a gradual and negative impact on the electrical performance and service life of the cable.

### SUMMARY

In view of the above, it is necessary to provide an improved direct current submarine cable.

The technical scheme provided by the present invention is presented below.

A direct current submarine cable includes, from inside to outside, a conductor unit, an insulation unit, and a protection unit. The protection unit includes a water blocking tape, a metal sheath, and an outer sheath from inside to outside. A return unit is also installed, the return unit having the same current carrying capacity as the conductor unit.

Preferred, the return unit is arranged on the outer periphery of the metal sheath, and the return unit comprises an insulating sheath and a return conductor layer arranged in order from the inside to the outside.

Preferred, the protection unit comprises a plurality of optical fiber units and return conductors arranged in an array, and the optical fiber units are embedded in the return conductor layer and arranged in a circumferential array.

Preferred, the outer circumference of the return conductor is covered with insulating parts.

Preferred, an inner sheath is arranged on the outer circumference of the return conductor layer, and the inner sheath and the outer circumference of the return unit are arranged in a fit manner.

Preferred, the protection unit further comprises a fiber layer and an armor layer, the fiber layer and the armor layer are positioned between the outer sheath and the return unit.

Preferred, a plurality of optical fiber units in a circular array are arranged on the outer periphery of the insulation unit, the optical fiber units are arranged on the inner side of the metal sheath, and fiber unit reinforcements are arranged on both sides of the circumferential direction of the optical fiber unit.

Preferred, the recirculation unit is an armor layer arranged on the inner side of the outer sheath.

Preferred, the return unit is arranged on the inner side of the metal sheath, the return unit comprises a plurality of twisted copper wires, and the twisted copper wires are arranged in a circumferential array and embedded between adjacent optical fiber units.

Compared with the prior art, the above-mentioned direct current submarine cable is provided with a return unit in the submarine cable, and the return unit is designed to have the same current carrying capacity as the conductor unit. When a direct current submarine cable in the same direct current transmission circuit fails, the return conductor in the other intact direct current submarine cable can be used as a return path to form a loop with its own conductor to continue working to ensure a complete dynamic direct current submarine cable has 50% of the power transmission capacity of the original power transmission circuit.

### BRIEF DESCRIPTION OF THE DRAWINGS

Implementations of the present technology will now be described, by way of example only, with reference to the attached figures.
Fig. 1 is a schematic cross-sectional view of a direct current submarine cable in a first embodiment.
Fig. 2 is a schematic cross-sectional view of a direct current submarine cable in a second embodiment.
Fig. 3 is a schematic cross-sectional view of a return conductor in the cable of fig. 2.
Fig. 4 is a schematic cross-sectional view of a direct current submarine cable in a third embodiment.
Fig. 5 is a schematic cross-sectional view of a direct current submarine cable in a fourth embodiment.
Fig. 6 is a schematic cross-sectional view of a direct current submarine cable in a fifth embodiment.

### LABEL OF COMPONENTS

| | |
|---|---|
| direct current submarine cable | 100 |
| conductor unit | 10 |
| insulation unit | 30 |
| shielding layer | 31 |
| inner shielding layer | 311 |
| outer shielding layer | 313 |
| insulating layer | 33 |
| return unit | 50 |
| insulating sheath | 51 |
| return conductor | 53 |
| return conductor | 531 |
| insulating member | 5313 |
| inner sheath | 55 |
| twisted copper wire | 57 |
| protection unit | 70 |
| water blocking tape | 7 1 |
| metal sheath | 73 |
| optical fiber units | 74 |
| fiber unit reinforcement | 741 |
| fiber layer | 75 |
| inner polyester fiber wrapping tape | 751 |
| outer polyester fiber wrapping tape | 753 |
| armor layer | 77 |
| outer sheath | 79 |

### DETAILED DESCRIPTION

It will be appreciated that for simplicity and clarity of illustration, where appropriate, reference numerals have been repeated among the different figures to indicate corresponding or analogous elements. In addition, numerous specific details are set forth in order to provide a thorough understanding of the exemplary embodiments described herein. However, it will be understood by those of ordinary skill in the art that the exemplary embodiments described herein can be practiced without these specific details. In other instances, methods, procedures, and components have not been described in detail so as not to obscure the related relevant feature being described. The drawings are not necessarily to scale and the proportions of certain parts may be exaggerated to better illustrate details and features. The description is not to be considered as limiting the scope of the exemplary embodiments described herein.

Several definitions that apply throughout this disclosure will now be presented.

The term "substantially" is defined to be essentially conforming to the particular dimension, shape, or other feature that the term modifies, such that the component need not be exact. For example, "substantially cylindrical" means that the object resembles a cylinder, but can have one or more deviations from a true cylinder. The term "comprising" means "including, but not necessarily limited to"; it specifically indicates open-ended inclusion or membership in a so-described combination, group, series, and the like.

### First Embodiment:

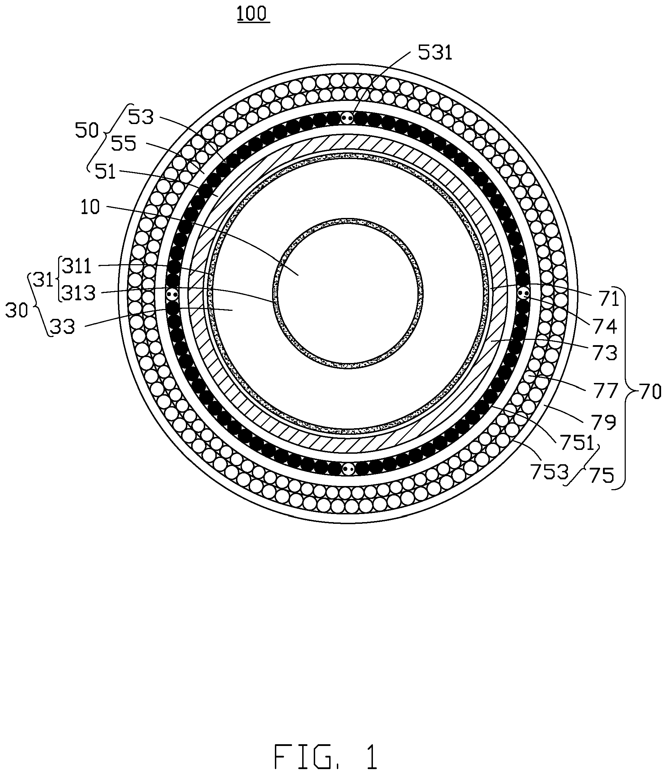

Referring to fig. 1, a direct current submarine cable 100 includes a conductor unit 10, an insulation unit 30, a return unit 50, and a protection unit 70. The conductor unit 10, the insulation unit 30, and the protection unit 70 are arranged in that order from the inside to the outside. The return unit 50 is embedded inside the protection unit 70. In an embodiment, the conductor unit 10 is a waterproof conductor.

In an embodiment, the insulating unit 30 includes at least one shielding layer 31 and an insulating layer 33. The insulating unit 30T has two shielding layers 31, an inner shielding layer 311 and an outer shielding layer 313. The inner shielding layer 311 and the outer shielding layer 313 are respectively disposed on the inner and outer sides of the insulating layer 33.

In an embodiment, the protection unit 70 includes a water blocking tape 71, a metal sheath 73, a number of optical fiber units 74, at least one fiber layer 75, an armor layer 77, and an outer sheath 79. The water blocking tape 71 is arranged at the outer periphery of the outer shielding layer 313 and attached to the outer shielding layer 313. The water blocking tape 71, the metal sheath 73, the optical fiber units 74, the armor layer 77 and the outer sheath 79 are arranged in that order from the inside to the outside. The optical fiber units 74 are arranged in a circular array on the outer periphery of the metal sheath 73. In an embodiment, the protection unit 70 has two fiber layers 75, the two fiber layers 75 being an inner polyester fiber wrapping tape 751 and an outer polyester fiber wrapping tape 753. The inner polyester fiber wrapping tape 751 and the outer polyester fiber wrapping tape 753 are respectively disposed on the inner and outer sides of the armor layer 77.

In an embodiment, the protection unit 70 has four optical fiber units 74, and the four optical fiber units 74 are arranged at the quarters of the circular array in the return unit 50. For optical fiber communication, when the submarine cable is operating normally or the return conductor layer is carrying current, a temperature of the return unit 50 can be directly collected, bymonitoring the operating status of the submarine cable and the temperature of the surrounding environment. In addition, the optical unit 74 being arranged at quarter intervals ensures that the fiber unit 74 in a direction perpendicular to an external direction of a source of damage, continuing to work even when the fiber unit 74 is damaged. Complete loss of all communication and monitoring functions at one time is thereby avoided.

In an embodiment, the return unit 50 includes an insulating sheath 51, a return conductor layer 53, and an inner sheath 55 arranged from the inside to the outside of the return unit 50. The insulating sheath 51 is arranged on the outer periphery of the metal sheath 73. The return conductor layer 53 has the same diameter as the circle formed by the array of optical fiber units 74. The return conductor layer 53 includes a plurality of return conductors 531, the return conductors 531 are embedded between the optical fiber units 74. The conductor part of the return conductor 531 has the same current-carrying capacity as the conductor unit 10. In an embodiment, the conductor part of the return conductor 531 is of the same material as the conductor unit 10, and the conductor part of the return conductor 531. The total cross-sectional area of the conductor part of the return conductor 531 is equal to the cross-sectional area of the conductor unit 10. The inner sheath 55 is arranged between the inner polyester fiber wrapping tape 751 and the armor layer 77.

In the disclosure, return conductors 531 are arranged in the direct current submarine cable 100 to form the return conductor layer 53, the return conductor 531 being made of the same material as the conductor unit 10, and the return conductor 531 has the same current carrying capacity as the conductor unit 10. The insulating sheath 51 and the inner sheath 55 are arranged inside and outside of the return conductor to meet the voltage-dependent insulation needs of the system during the return. When one polarity of the submarine cable fails in the direct current transmission circuit, the other polarity of the submarine cable can continue to work with the return conductor layer 53, and cooperate with the system to achieve 50% of the rated capacity of electrical energy transmission.

### Second embodiment:

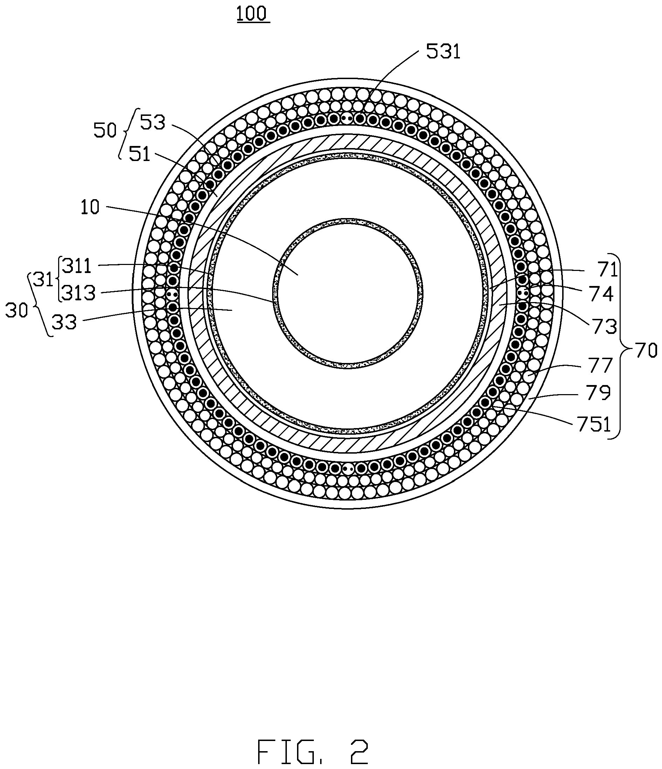

Referring to FIG. 2, the second embodiment is very similar to first embodiment, with the difference that the fiber layer 75 in the protection unit 70 is provided with only one layer, and the fiber layer 75 is positioned between the armor layer 77 and the optical fiber unit 74.

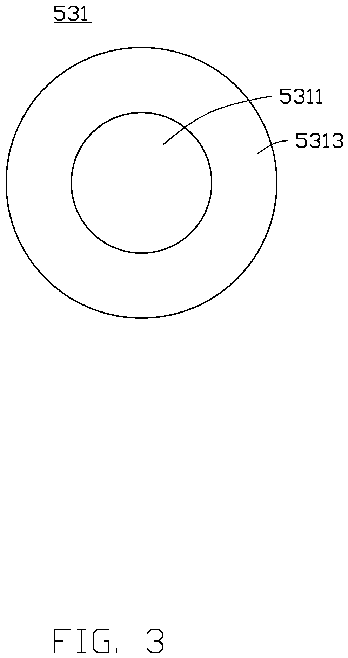

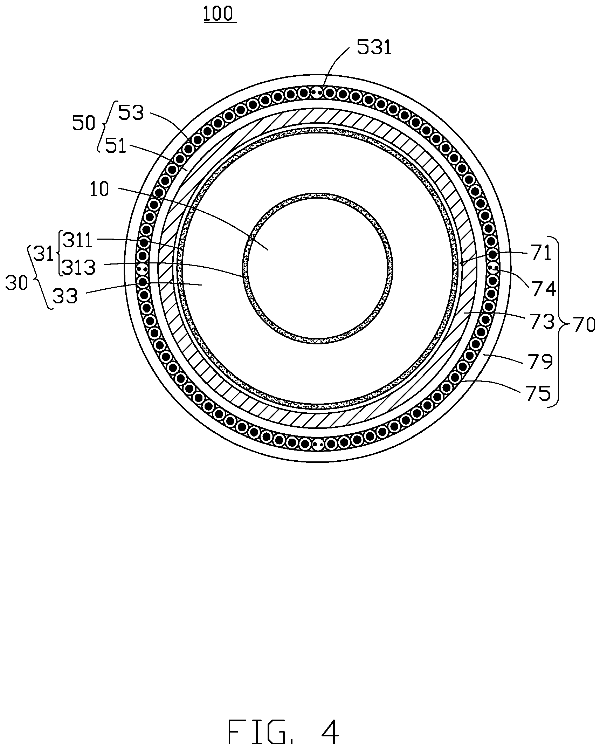

The return conductor layer 53 includes an insulating sheath 51 and a return conductor layer 53. The insulating sheath 51 is disposed on the outer periphery of the metal sheath 73, and the return conductor layer 53 includes return conductors 531. The return conductors 531 are embedded between the optical fiber units 74 to allow the conductor part of the return conductor 531 to have the same current carrying capacity as the conductor unit 10. In an embodiment, the conductor part of the return conductor 531 is of the same material as the conductor unit 10, and the sum of the cross-sectional area of the conductor part of the return conductor 531 is equal to that of the cross-sectional area of the conductor unit 10, to give the conductor part of the return conductor 531 the same current-carrying capacity as the conductor unit 10. In an embodiment, referring to FIG. 3, the outer circumference of the return conductor 531 is covered with an insulating member 5313. In another embodiment, referring to FIG. 4, the armor layer 77 located inside the outer sheath 79 can be removed, so that the direct current submarine cable 100 can be applied in terrestrial direct current cable lines.

### Third embodiment:

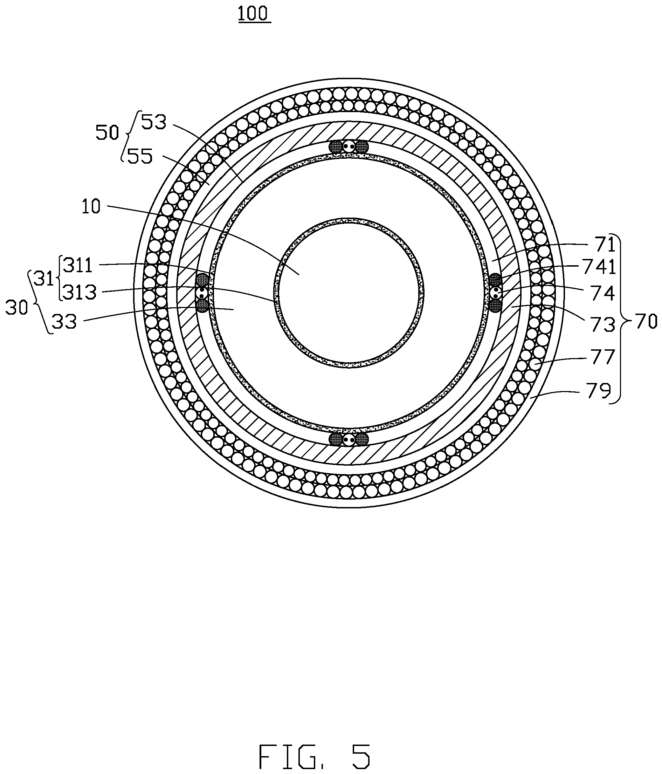

Referring to FIG. 5, the third embodiment is very similar to the first embodiment, and the difference is that: the protection unit 70 includes a water blocking tape 71, a metal sheath 73, an insulating sheath 51, an armor layer 77, and an outer sheath 79 arranged in that order from the inside to the outside of the protection unit 70. In this embodiment, the return unit 50 is the armor layer 77 in the protection unit 70, and the cross-sectional area of the armor layer 77 allows the current carrying capacity of the armor layer 77 to be the same as the current carrying capacity of the conductor unit 10. Moreover, a number of optical fiber units 74 arranged in an array are arranged between the water blocking tape 71 and the metal sheath 73. The fiber unit reinforcements 741 are arranged on both sides of the circumferential direction of the optical fiber unit 74 to ensure that the optical fiber unit 74 remains in good condition during production, transportation, installation and operation. In this embodiment, if a direct current submarine cable 100 in a same direct current transmission circuit fails, another intact direct current submarine cable 100 can use the armor layer 77 as the return path. In an embodiment, the armor layer 77 uses steel wire as the armor material. In another embodiment, the armor layer 77 can also be made of copper, aluminum, or aluminum alloy.

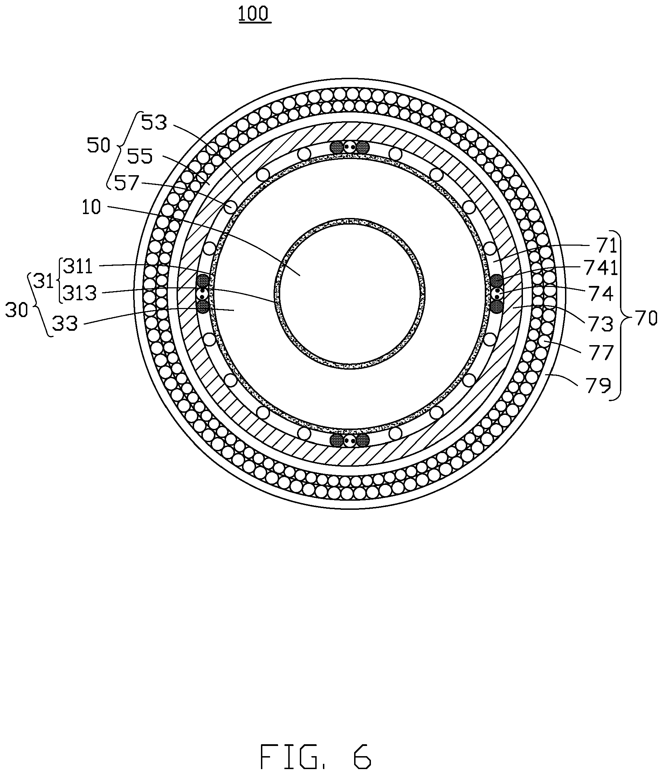

In another embodiment, referring to FIG. 6, the return conductor layer 53 includes twisted copper wires 57, and the twisted copper wires 57 are arranged between the adjacent optical fiber units 74. The combination of the wires 57 and the metal sheath 73 gives the same current-carrying capacity as the conductor unit 10. In an embodiment, the cross-sectional area of the selecting the twisted copper wire 57 and the metal sheath 74 is determined by the combination of the selecting the twisted copper wire 57 and the metal sheath 74 having the same current-carrying capacity as the conductor unit 10. When a direct current submarine cable 100 in a same direct current transmission circuit fails, another intact direct current submarine cable 100 can use the metal sheath 73 and the twisted copper wire 57 as the return path together, so there is no need to increase the thickness of the lead sheath to meet the current carrying capacity, reducing the overall weight and cost of the submarine cable.

The embodiments shown and described above are only examples. Even though numerous characteristics and advantages of the present technology have been set forth in the foregoing description, together with details of the structure and function of the present disclosure, the disclosure is illustrative only, and changes may be made in the details, including matters of shape, size, and arrangement of the parts within the principles of the present disclosure, up to and including the full extent established by the broad general meaning of the terms used in the claims.

## Claims

1. A direct current submarine cable comprising:
a conductor unit;
a return unit embedded in the protection unit;
an insulation unit; and
a protection unit comprising a water blocking tape, a metal sheath and an outer sheath arranged from the inside to the outside;
wherein the conductor unit, the insulation unit and the protection unit sequentially arranged from the inside to the outside, the return conductor has the same current-carrying capacity as the conductor unit.

2. The direct current submarine cable of claim 1, wherein the return unit is arranged on the outer periphery of the metal sheath, and the return unit comprises an insulating sheath and a return conductor layer arranged in order from the inside to the outside.

3. The direct current submarine cable of claim 2, wherein the protection unit comprises a plurality of optical fiber units and return conductors arranged in an array, and the optical fiber units are embedded in the return conductor layer and arranged in a circumferential array.

4. The direct current submarine cable of claim 3, wherein the outer circumference of the return conductor is covered with insulating parts.

5. The direct current submarine cable of claim 4, wherein an inner sheath is arranged on the outer circumference of the return conductor layer, and the inner sheath and the outer circumference of the return unit are arranged in a fit manner.

6. The direct current submarine cable of claim 3, wherein the protection unit further comprises a fiber layer and an armor layer, the fiber layer and the armor layer are positioned between the outer sheath and the return unit.

7. The direct current submarine cable of claim 1, wherein a plurality of optical fiber units in a circular array are arranged on the outer periphery of the insulation unit, the optical fiber units are arranged on the inner side of the metal sheath, and fiber unit reinforcements are arranged on both sides of the circumferential direction of the optical fiber unit.

8. The direct current submarine cable of claim 7, wherein the recirculation unit is an armor layer arranged on the inner side of the outer sheath.

9. The direct current submarine cable of claim 7, wherein the return unit is arranged on the inner side of the metal sheath, the return unit comprises a plurality of twisted copper wires, and the twisted copper wires are arranged in a circumferential array and embedded between adjacent optical fiber units.

10. The direct current submarine cable of claim 1, wherein the insulating unit comprises two shielding layers and an insulating layer, and the two shielding layers are respectively attached to the inner and outer sides of the insulating layer.
